# EUROPÄISCHE PATENTSCHRIFT

(11) **EP 2 836 402 B1**
(45) Veröffentlichungstag und Bekanntmachung des Hinweises auf die Patenterteilung: **07.11.2018**
(21) Anmeldenummer: 13717458.7
(22) Anmeldetag: 05.04.2013
(51) Int. Cl.: B60T 1/06, B60T 8/171, B60T 8/172, B60T 8/1755, B60T 17/22, F16D 55/224, F16D 55/225, F16D 55/226, F16D 55/227, F16D 55/46, F16D 65/092, F16D 65/14, F16D 65/66

(54) **BREMSSYSTEM UND BREMSVERFAHREN FÜR EINE ELEKTRISCH BETÄTIGTE, NICHT-LINEARE REIBUNGSBREMSE**
BRAKE SYSTEM AND BRAKING METHOD FOR AN ELECTRICALLY ACTUATED NONLINEAR FRICTION BRAKE
SYSTÈME DE FREINAGE ET PROCÉDÉ DE FREINAGE POUR UN FREIN À FRICTION NON LINÉAIRE À ACTIONNEMENT ÉLECTRIQUE

(30) Priorität: 12.04.2012 AT 501292012
(43) Veröffentlichungstag der Anmeldung: 18.02.2015
(73) Patentinhaber: VE Vienna Engineering Forschungs- und Entwicklungs GmbH, 1190 Wien (AT)
(72) Erfinder: PUTZ, Michael, A-2301 Groß Enzersdorf (AT)
(74) Vertreter: Patentanwälte Pinter & Weiss OG
(86) Internationale Anmeldenummer: PCT/EP2013/057192
(87) Internationale Veröffentlichungsnummer: WO 2013/152998

(56) Entgegenhaltungen:
- WO-A1-99/02885
- WO-A1-03/082651
- WO-A1-2009/062880
- WO-A1-2010/133463
- DE-A1- 10 324 424
- DE-A1-102005 030 618
- DE-A1-102005 030 620
- DE-A1-102006 012 076
- DE-A1-102006 047 210
- DE-A1-102007 017 246
- DE-C1- 19 629 936
- US-A1- 2003 024 778

## Beschreibung

Die gegenständliche Erfindung betrifft ein Bremssystem und ein Verfahren zum Betreiben einer elektrisch betätigten, nicht-linearen Reibungsbremse, wobei zum Bremsen ein Betätigungsteil einer Andrückeinrichtung durch ein Betätigungsmittel zwischen einem Anfangsbetätigungswinkel und einem Endbetätigungswinkel verdreht wird, um einen Bremsbelag zur Erzeugung eines Bremsmoments gegen eine Reibfläche zu drücken, wobei die Andrückeinrichtung an einem Verschleißnachsteller angeordnet ist.

Neben herkömmlichen hydraulischen und pneumatischen Bremsen sind heute auch anders betätigte Reibungsbremsen bekannt, die z.B. einen Reibbelag mittels Elektromotor an eine Reibfläche der Reibungsbremse andrücken, wie z.B. Schraubenantriebe (z.B. für Parkbremsen, aber versuchsweise auch für Betriebsbremsen) wie z.B. in der DE 10 2006 047 210 A1 oder sogenannten Keilbremsen, wie z.B. in der DE 103 92 252 B4 beschrieben. Darin wird eine elektromechanische Reibungsbremse mit Selbstverstärkung beschrieben, bei der Walzen auf keilförmigen, drehbaren Rampen abrollen, um den Bremsbelag zuzustellen. Auch in der DE 103 24 424 A1 ist eine elektromechanische Reibungsbremse mit Selbstverstärkung beschrieben, bei der ein Anstellwinkel eines Hebels, an dem ein Bremsbelag angeordnet ist, eingestellt werden kann, um die Höhe der Selbstverstärkung zu ändern.

Aus der WO 2010/133463 A1 geht wiederum eine mittels Exzenter betätigte Bremse hervor. Reibungsbremsen, die über Nocken, Exzenter, Kniehebel oder ähnlichem angedrückt werden, wie z.B. in der WO 2010/133463 A1, besitzen von Haus aus ein nicht-lineares Kraft-Wegverhalten, d.h., dass die erzeugte Andrückkraft (bzw. das erzeugte Andrückmoment) keinen linearen Zusammenhang mit dem Betätigungsweg (oder Drehwinkel) aufweist. Diese Reibungsbremsen werden daher auch in der Regel über elektronische Steuerungen angesteuert.

Die zum Zuspannen einer Reibungsbremse nach der WO 2010/133463 A1 notwendige mechanische Arbeit (Energie) ist Kraft*Weg, also z.B. für die Vorderradbremse eines Mittelklassewages 30kN * 1mm = 30J (wenn realistische 30kN Anpresskraft des Bremsbelages bei einem während des Zuspannens zurückgelegten Weg von 1 mm angenommen werden). Dabei treten die 30J Energie bei Vollbremsung auf, bei Bremsbeginn ist die eingebrachte Energie Null. Das ist eine erstaunlich geringe mechanische Energie, die zum Zuspannen einer Vorderbremse für Vollbremsung notwendig ist. Wenn dies in z.B. 0,2s geschehen soll (typische Zeit zur Vollbremsung einer Reibungsbremse) ist die mechanische Leistungsaufnahme während dieser Zeit 150W, je nach Geschwindigkeitsverlauf. Bei einer elektrisch betätigten Bremse entsteht aber über die Wirkungsgrade von Elektromotor, Betätigungsmechanik und Ansteuerelektronik leicht ein elektrischer Bedarf von 300W pro Vorderradbremse.

Die Betätigungsmechanik der Bremse wird dabei auch mit hohen Kräften belastet (z.B. 30kN), womit selbst bei guter Lagerung zusätzliche mechanische Reibung in den bewegten Teilen der Reibungsbremse entsteht. Damit sind, je nach Lagerung der Betätigungsmechanik, bei einer Vollbremsung bis zu 600W elektrische Betätigungsleistung pro Vorderrad nicht auszuschließen. Diese Leistungen (bis 1,2kW für beide Vorderbremsen) kommen an die Grenze eines 12V Bordnetzes eines herkömmlichen KFZ, vor allem wenn zusätzlich weitere elektrische Verbraucher, wie z.B. Licht, Klimaanlage, Heizung, Fahrzeugentertainmentsysteme, etc., eingeschaltet sind. Es ist daher wünschenswert, so wenig elektrische Energie bzw. Leistung wie möglich für eine Bremsung aufbringen zu müssen, was insbesondere für Hybrid- oder Elektrofahrzeuge zutrifft. In der Energie bzw. Leistung zum Zuspannen der Reibungsbremse stecken aber zwei nahe liegende Verbesserungsansätze: einerseits kann die benötigte Andrückkraft durch kleinere Reibung in der Betätigung und/oder unterstützende Selbstverstärkung in der Reibungsbremse reduziert werden, andererseits kann der Betätigungsweg durch steifere Bremsen (die sich beim Zuspannen weniger verformen) verkleinert werden. Selbstverstärkung ist dabei ein bei Reibungsbremsen hinlänglich bekannter Effekt, der dadurch entsteht, dass der Reibbelag bei einer Bremsung durch die Reibung zwischen Reibbelag und Reibfläche mitgenommen wird und damit die Bremswirkung verstärkt. Dieser Effekt wird bei vielen Reibungsbremsen bewusst ausgenutzt.

Bei der Bremse nach der WO 2010/133463 A1 ist die Steifigkeit des Bremssattels von der Bauweise her relativ hoch, da der Bremssattel als einseitig offener Kasten ausgeführt ist, um die Betätigungsmechanik im Inneren des kastenförmigen Bremssattels unterzubringen. Dieser offene Kasten weist von Natur aus durch die dreidimensionale Struktur mit hohen Wänden eine gute Biegesteifigkeit beim Zuspannen auf. Die erzielbaren geringen Verformungen können daher zur Verringerung des Betätigungsweges und damit proportional zu Verringerung der Betätigungsenergie und Leistung eingesetzt werden. Der dargestellte kastenförmige Bremssattel kann für Verformungen von grob 0,2 bis 1mm, also relativ steif, ausgelegt werden, je nach Belastung, Material und Geometrie (Bremssättel bei hydraulischen Bremsen können zum Vergleich bei Vollbremsung ohne Probleme durchaus über 1mm aufweiten, also relativ weich sein, weil die Betätigungsenergie aus dem Bremsservo stammt und nicht elektrisch aus dem Bordnetz erzeugt werden muss). Damit lässt sich die elektrische Betätigungsenergie im Vergleich zu obiger Rechnung grob halbieren und eine Betätigung am 12V Bordnetz wird wieder problemlos möglich.

Allerdings ergeben sich bei einer elektrisch betätigten Bremse mit angestrebter hoher Steifigkeit andere Probleme. Bei herkömmlichen Bremsen mit niedriger Steifigkeit dominiert die Elastizität des Bremssattels gegenüber der Belagselastizität. Die Belagselastizität ändert sich aber über das Belagsleben von frisch bis abgenutzt ganz wesentlich. Im abgenutzten Zustand geht die Belagselastizität gegen Null, weil fast nur noch die Stahlträgerplatten der Reibbeläge vorhanden sind. Wenn die Elastizität des Bremssattels groß ist (die Steifigkeit also gering ist), wird sich das Gesamtverhalten der Reibungsbremse jedoch nur wenig ändern, weil die sich ändernde Belagselastizität nicht wesentlich ins Gewicht fällt. Das ist bei konventionellen Bremsen der Fall, daher war es bei konventionellen Bremsen bisher nicht notwendig, Maßnahmen für Bremsveränderung durch Belagsverschleiß zu treffen. Wird aber eine Bremse mit hoher Steifigkeit notwendig, wie im Falle einer elektrisch betätigten Bremse, so ergibt sich ein guter Teil des gesamten elastischen Verhaltens der Reibungsbremse aus den Bremsbelägen. Mit der stark veränderlichen Belagselastizität bei Belagsverschleiß ändert sich dadurch jedoch auch das Verhalten der Reibungsbremse signifikant, weil sich das Kraft-Wegverhalten der Reibungsbremse verändert. Der Einfluss der Steifigkeit der Bremse bzw. der Bremsenteile auf das Kraft-Wegverhalten der Reibungsbremse ist daher bei steiferen Bremsen groß, bei weicheren Bremsen eher gering, tritt aber grundsätzlich immer auf.

Die DE 10 2004 008 383 A1 beschreibt ein Verfahren, um das Übertragungsverhalten einer Bremse während einer Bremsung konstant zu halten. Während einer Bremsung erhöht sich die Betriebstemperatur der Bremse, was Einfluss auf den Reibwert, die Kontaktposition und Steifigkeit der Bremse hat. Mit dem offenbarten Verfahren soll dieser Einfluss während einer Bremsung weggeregelt werden. Eine Möglichkeit, das sich ändernde elastische Verhaltens bei Verschleiß der Reibbeläge zu kompensieren, kann der DE 10 2004 008 383 A1 nicht entnommen werden.

Es ist daher eine Aufgabe der gegenständlichen Erfindung, bei einer elektrisch betätigten Reibungsbremse mit nicht-linearem Weg-Kraftverhalten den Einfluss des sich ändernden elastischen Verhaltens bei Verschleiß der Reibbeläge zu verringern.

Diese Aufgabe wird erfindungsgemäß dadurch gelöst, indem der Anfangsbetätigungswinkel des Betätigungsteils in Abhängigkeit von einem aktuellen Verschleißzustand des Bremsbelages eingestellt wird.

Reibungsbremsen mit nicht-linearem Weg-Kraftverhalten werden nicht wie hydraulische Bremsen direkt betätigt, sondern indirekt über elektronische Bremsensteuerungen. Das Bremspedal ist dabei nicht direkt mit dem Bremsbelag verbunden. Das "Pedalgefühl" ist aber sehr wichtig für die gute Dosierbarkeit und Bedienbarkeit einer Bremse. In der Regel soll auch die Betätigungskraft am Bremspedal mit zunehmender Bremswirkung zunehmen, eventuell sogar stark gegen Vollbremsung. Die Bremsensteuerung sorgt dabei dafür, dass ein angenehmer Zusammenhang zwischen dem Kraft-Wegverhalten am Bremspedal und dem Kraft-Wegverhalten der Bremse erzeugt wird. Bei sich änderndem Kraft-Wegverhalten der Bremse, z.B. aufgrund der sich ändernden Elastizität der Bremse bei Verschleiß des Bremsbelages, würde sich aber auch nachteilig das "Pedalgefühl" ändern.

Es ist daher eine weitere Aufgabe der Erfindung, den Einfluss des sich ändernden elastischen Verhaltens bei Verschleiß der Reibbeläge auf das Pedalgefühl zu verringern, was gelöst wird, indem das Bremspedalgefühl in Abhängigkeit von einem aktuellen Verschleißzustand des Bremsbelages eingestellt wird.

Die gegenständliche Erfindung ist dabei besonders vorteilhaft, wenn bei einer "steifen" Reibungsbremse die Änderung des Bremsverhaltens durch Verschleiß des elastischen Bremsbelages so groß ist, dass sich das Betriebsverhalten der Reibungsbremse, insbesondere aufzubringende elektrische Energie und/oder Bremspedalgefühl, nicht vernachlässigbar ändern. Dieses Problem wird durch die erfindungsgemäßen Maßnahmen behoben bzw. zumindest verringert, indem das sich ändernde Kraft-Weg Verhalten der Reibungsbremse kompensiert wird. Diese Kompensation kann aus zwei Aspekten bestehen, nämlich dem Kraft-Wegverhalten, welches der Fahrer am Bremspedal spürt, und dem Einstellen von günstigen internen Betriebszuständen in der Reibungsbremse bzw. in Betätigungsmechanik.

Die gegenständliche Erfindung wird nachfolgend unter Bezugnahme auf die Figuren 1 bis 6, die beispielhaft, schematisch und nicht einschränkend vorteilhafte Ausgestaltungen der Erfindung zeigen, näher erläutert. Dabei zeigt
Fig.1 eine schematische Darstellung einer Schwimmsattel-Scheibenbremse mit Bremsbetätigung,
Fig.2 den Verlauf des Betätigungsmoments T_{A} und des Bremsmoments T_{B} in Abhängigkeit vom Betätigungswinkel a,
Fig.3 den Betätigungswinkelbereich am Beispiel einer exzentrisch betätigten Reibungsbremse,
Fig.4 den Verlauf des Betätigungsmoments T_{A} in Abhängigkeit vom Betätigungswinkel α bei neuen und verschlissenen Bremsbelägen,
Fig.5 den Verlauf des Bremsmoments T_{B} in Abhängigkeit vom Betätigungswinkel α bei neuen und verschlissenen Bremsbelägen und
Fig.6 ein Bremssystem in einem Fahrzeug.

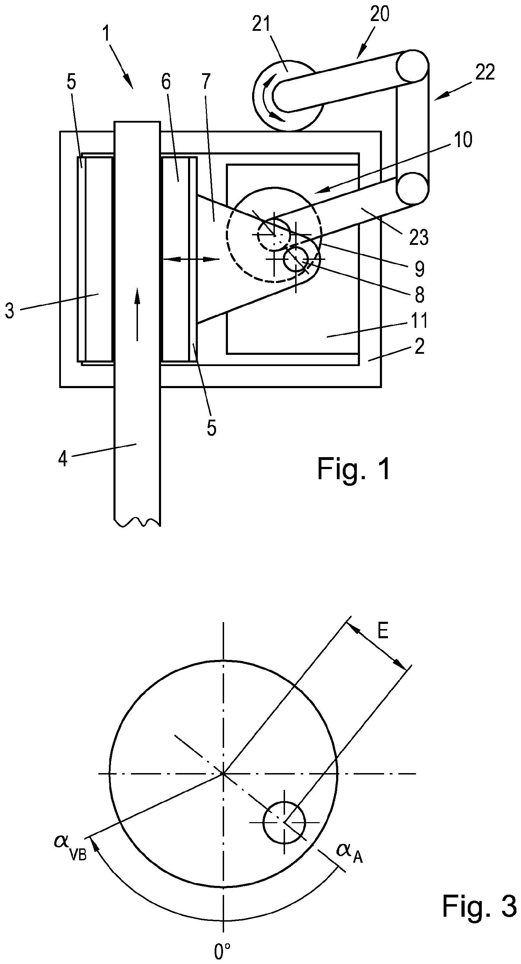

Die Erfindung wird nachfolgend anhand Fig.1 beispielhaft anhand einer schematisch dargestellten Reibungsbremse 1 in Form einer Schwimmsattel-Scheibenbremse näher erläutert. Schwimmsattel-Scheibenbremsen sind an sich hinlänglich bekannt, weshalb hier nicht näher auf die Eigenschaften und Funktion einer Schwimmsattel-Scheibenbremse und auf den grundsätzlichen Einbau einer Schwimmsattel-Scheibenbremse , z.B. in einem Fahrzeug, eingegangen wird. Die Erfindung kann aber grundsätzlich auch auf andere Bremsentypen, wie z.B. eine Trommelbremse, angewendet werden. Ebenso kann auch eine andere Reibfläche als eine Bremsscheibe oder eine Bremstrommel vorgesehen sein, z.B. eine mehr oder weniger ebene Fläche, z.B. als Bremse für eine Linearbewegung.

Fig.1 zeigt eine Reibungsbremse 1 mit einem Schwimmsattel 2 als Bremssattel, der eine Reibfläche, hier in Form einer Bremsscheibe 4, umgibt. Am Schwimmsattel 2 ist ein feststehender (bezogen auf den Schwimmsattel 2) Bremsbelag 3 und ein beweglicher (ebenfalls bezogen auf den Schwimmsattel 2) Bremsbelag 6 angeordnet. Der bewegliche Bremsbelag 6 wird zum Bremsen durch eine Andrückeinrichtung 10, nach Überwindung eines eventuell vorhandenen Luftspalts, gegen die Bremsscheibe 4 gedrückt, wie durch den Doppelpfeil in Fig.1 angedeutet. Dabei zentriert sich der Schwimmsattel 2 selbsttätig, sodass beide Bremsbeläge 3, 6 an der Bremsscheibe 4 anliegen und gegen diese gedrückt werden. Dadurch entsteht die Belagsandrückkraft, die ein bestimmtes Bremsmoment hervorruft. Der Bremsbelag 3, 6 kann dabei auch jeweils auf einem Belagsträger 5 angeordnet sein.

Die Andrückeinrichtung 10 ist an einem Bremsenteil angeordnet. Der Bremsenteil kann der Schwimmsattel 2 sein, kann aber auch, wie hier, ein an sich bekannter Verschleißnachsteller 11 sein. Dabei ist der Verschleißnachsteller 11 am Schwimmsattel 2 angeordnet und die Andrückeinrichtung 10 wiederum am Verschleißnachsteller 11. Die gesamte Andrückeinrichtung 10 wird dabei vom Verschleißnachsteller 11 zum Ausgleich eines entstehenden Verschleißes an den Bremsbelägen 3, 6 bewegt. Die Andrückeinrichtung 10 oder der Bremsbelag 3 kann dabei bevorzugt in der Reibungsbremse 1, z.B. wie hier im Schwimmsattel 2, geführt sein. Da der Verschleißnachsteller 11 nur sehr geringe Wege und diese nur von Zeit zu Zeit verstellen muss, ist die Andrückeinrichtung 10 quasi ortsfest in der Reibungsbremse 1 angeordnet. Ein solcher Verschleißnachsteller 11 ist an sich in vielfältiger Ausführung bekannt, weshalb hier nicht näher darauf eingegangen wird. Der Verschleißnachsteller 11 kann entweder nur bei übermäßigem Luftspalt zwischen Bremsbelag 3, 6 und Bremsscheibe 4 zur Nachführung benutzt werden (ähnlich wie bei Trommelbremsen), oder er kann auch kurz vor jeder Bremsbetätigung genutzt werden, um den Luftspalt (auch beide) zwischen Bremsbelag 3, 6 und Bremsscheibe 4 auf Null zu bringen und sogar, um eine erste kleine Andrückkraft in die Reibungsbremse 1 einzubringen.

Für den Aktuator des Verschleißnachstellers 11 könnte im Betrieb der Reibungsbremse 1 die Strategie benutzt werden, die Andrückeinrichtung 10 zum Einleiten der Bremsung auf eine Position des beginnenden Kontaktes zwischen Reibbelag und Reibfläche zu bringen, also den Luftspalt komplett zu überwinden, z.B. über Messung der Stromaufnahme, der Position oder des einsetzenden Bremsmoments. Zum Lösen der Bremse kann der Verschleißnachsteller 11 wieder in eine Position kaum noch vorhandener Restbremswirkung gebracht werden oder bewusst ein Luftspalt eingestellt werden, um den Reibbelag vollständig von der Reibfläche abzuheben, um damit die Verluste einer minimalen Restbremswirkung zu eliminieren. Dazu kann der Verschleißnachsteller 11 eine bestimmte Position vom Reibkontakt weit weg gefahren werden, oder eine bestimmte Zeit eingeschaltet werden, um den Reibbelag vom der Reibfläche zu entfernen. Für eine Schwimmsattel-Scheibenbremse kann der Verschleißnachsteller 11 auch benutzt werden, um beide Bremsbeläge vollständig von der Bremsscheibe abzuheben, wie z.B. in der WO 2010/133463 A1 näher erläutert ist.

Die Andrückeinrichtung 10 umfasst hier einen Halteteil 7, an dem der Bremsbelag 6 bzw. der Belagsträger 5 anliegt. Im Halteteil 7 ist eine Andrückwelle 8 beidseitig gelagert. Die Andrückwelle 8 ist wiederum in einer als Hohlwelle ausgeführten Betätigungswelle 9 gelagert, wobei die axiale Bohrung der Betätigungswelle 9 exzentrisch zur Drehachse der Betätigungswelle 9 ausgeführt ist. Die Betätigungswelle 9, die an einem ortsfesten, bzw. quasiortsfesten, Bremsenteil, hier der Verschleißnachsteller 11, gelagert ist, wird durch ein Betätigungsmittel 20 verdreht, sodass die Andrückwelle 8 durch die exzentrische Bohrung, je nach Drehrichtung, zur Bremsscheibe 4, oder von dieser weg, bewegt wird (angedeutet durch den Doppelpfeil). Die Belagsandrückkräfte werden hier somit über einen Exzenter erzeugt. Anstelle der exzentrisch in der Betätigungswelle 9 gelagerten Andrückwelle 8 könnte auch ein exzentrisch an der Betätigungswelle 9 angeordneter Wellenzapfen, an dem der Halteteil gelagert angeordnet ist, dienen. Ebenso könnte die Andrückeinrichtung 10 in Form einer Nocke, die am Belagsträger 5 oder an einem Halteteil 7 angreift, oder in Form eines Kniehebels ausgeführt sein. Gemeinsam ist allen Ausführungsformen das Betätigungsmittel 20, das einen Betätigungsteil der Andrückeinrichtung 10, z.B. eine Betätigungswelle 9, eine Nocke oder einen Hebel, zur Betätigung der Reibungsbremse 1 verdreht.

Als Betätigungsmittel 20 ist hier ein Elektromotor 21 vorgesehen, der über ein Gestänge 22 einen an der Betätigungswelle 9 angeordneten Betätigungshebel 23 verdreht. Selbstverständlich könnte auch jeder andere geeignete Antrieb als Betätigungsmittel 20 in Frage kommen, so z.B. ein Elektromotor, der die Betätigungswelle 9 direkt oder über ein Getriebe antreibt. Die Andrückeinrichtung 10 hat dabei einen gewissen, festgelegten Arbeitsbereich, in Form eines Betätigungswinkelbereiches des Betätigungsteils, z.B. der Betätigungswelle 9. Der Arbeitsbereich wird dabei vorteilhaft so gewählt, dass sich günstige Übersetzungsverhältnisse zur Erzeugung der Belagsandrückkräfte ergeben.

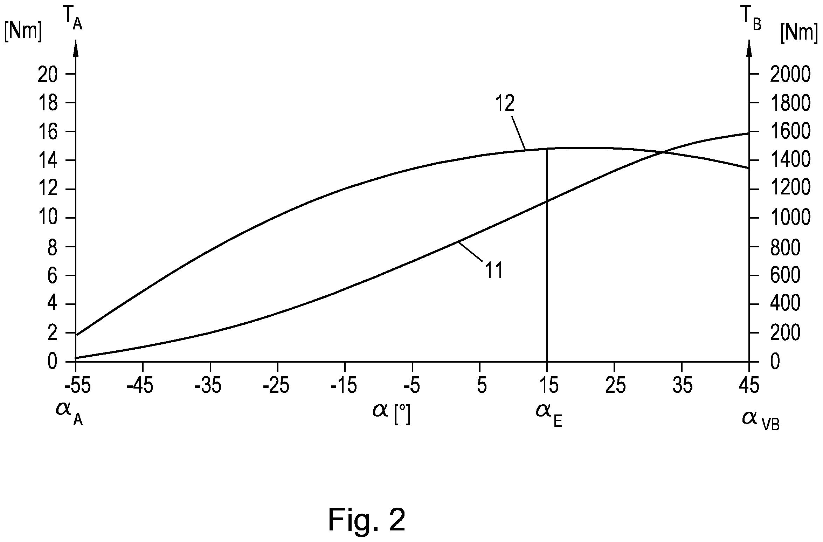

Eine derartige Reibungsbremse 1 hat dabei einen nicht-linearen Weg-Kraftverlauf, wie unter Bezugnahme auf die Fig. 2 und 3 näher erläutert wird. Fig.2 zeigt den Verlauf des Betätigungsmoments T_{A} (Kurve 12) und des daraus resultierenden Bremsmoments T_{B} (Kurve 11) über den Betätigungswinkel a. Das Betätigungsmoment T_{A} muss vom Betätigungsmittel 20, hier der Elektromotor 21, aufgebracht werden. Der Betätigungsbereich erstreckt sich dabei von einer Ausgangslage α_{A} bis zu einer Lage bei Vollbremsung α_{VB}. Die Winkellagen werden hier bezogen auf eine Nullstellung, die dem unteren Totpunkt des Exzenters entspricht (Fig.3), angegeben. Die Exzentrizität E (stark übertrieben dargestellt in den Fig.2 und 3) ist dabei z.B. 0,5 mm, sodass für den theoretisch maximalen Verdrehwinkel von -90° (scheibenfernes Maximum) bis +90° (scheibennahes Maximum) ein theoretisch maximaler Hub von 1mm entsteht. Davon wird in der Regel praktisch etwas weniger genutzt, z.B. von -60° in der Ausgangslage α_{A} bis zur Vollbremsung α_{VB} bei z.B. +60°. Eine normale Bremsung wird dabei in der Regel zwischen einem Anfangsbetätigungswinkel α_{A} und einen Endbetätigungswinkel α_{E}, z.B. 15°, bei dem das jeweils benötigte Bremsmoment T_{B} erreicht wird, erfolgen.

Durch den nicht-linearen Betätigungsmechanismus wird Anfangs schnell der kraftarme Weg zurückgelegt und mit steigender Belagsandrückkraft die mechanische Übersetzung zugunsten kleiner werdender Belagswegzunahme (und Eingangskraftzunahme) verändert. Wenn der Exzenter weiter zur Bremsscheibe 4 gedreht wird, nimmt die Belagswegssteigerung ab und die Belagsandrückkraft bei gleicher Eingangskraft (bzw. Eingangsmoment) zu. Man erkennt in Fig.2, dass ohne weiteres Ansteigen des Betätigungsmoments T_{A} durch den Exzenter aufgrund der Nichtlinearität immer höhere Bremsmomente T_{B} erzeugt werden. Zusätzlich kann zur Nichtlinearität in Vorwärtsfahrtrichtung auch Selbstverstärkung auftreten, weshalb das Betätigungsmoment T_{A} hier z.B. ab ca. 20° Betätigungswinkel α sogar absinkt. Selbstverstärkung beginnt ab einem Betätigungswinkel α=0°, also wenn der Exzenter den unteren Totpunkt überschreitet. Selbstverständlich könnte die Reibungsbremse aber auch so ausgeführt sein, dass keine Selbstverstärkung auftritt, z.B. indem der Bremsbelag oder der Belagsträger nur lose an Halteteil 7 anliegt, wodurch die Reibkraft zwischen Reibbelag und Reibfläche nicht in die Andrückeinrichtung 10 übertragen werden würde.

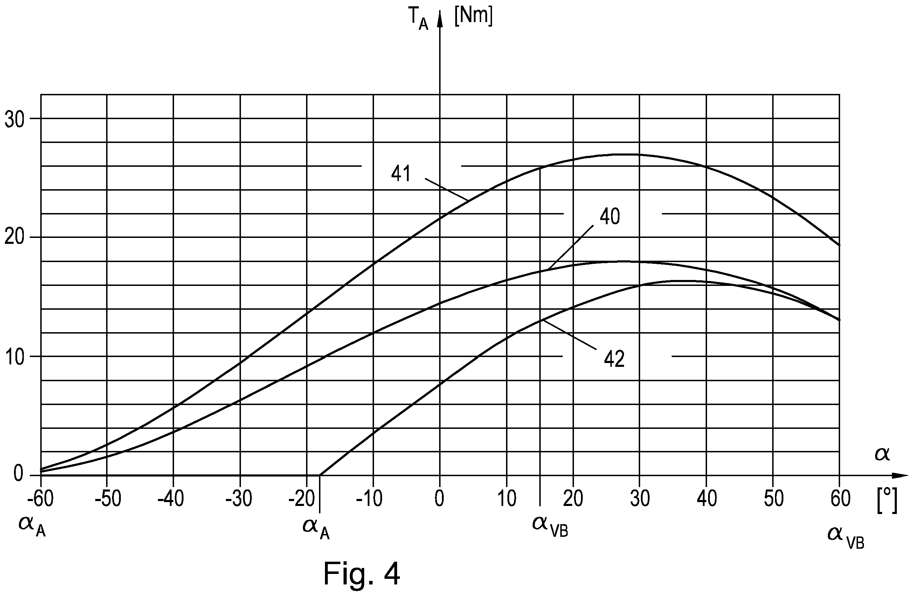

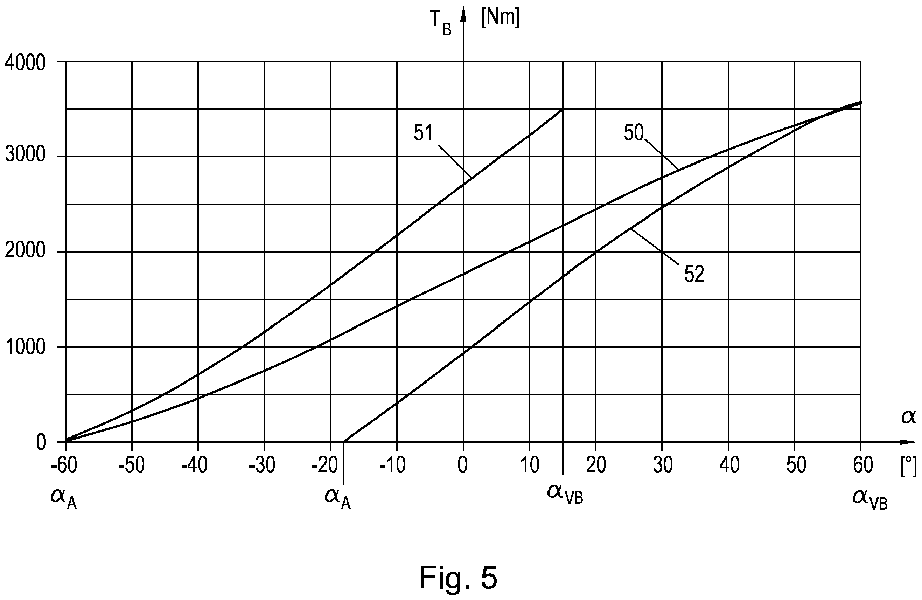

Mit Bezugnahme auf die Fig.4 und 5 wird nun der Einfluss der Belagselastizität auf das nicht-lineare Kraft-Wegverhalten der Reibungsbremse 1 erläutert. Die Kurve 40 in Fig. 4 zeigt den typischen Verlauf des Betätigungsmoment T_{A} einer elektrisch angetriebenen Reibungsbremse bei neuen bzw. unverschlissenen Bremsbelägen über einen angenommen Bereich des Betätigungswinkels α von -60° bis +60°. Aufgrund der einsetzenden Selbstverstärkung sinkt das Betätigungsmoment T_{A} ab einem bestimmten Betätigungswinkel α wieder. Analog dazu zeigt die Kurve 50 in Fig.5 das dabei entstehende Bremsmoment T_{B}, das bei α_{VB} das maximale Bremsmoment von ca. 3500Nm bei einem Betätigungsmoment T_{A} von ca. 13Nm erreicht. Das gezeigte Beispiel betrifft eine Reibungsbremse mit einem energiegünstigen, steifen Bremssattel geringer Elastizität, wodurch die Energie zur Betätigung der Reibungsbremse hauptsächlich in die unvermeidbare Belagselastizität gesteckt wird.

Der Betätigungswinkel α erreicht aber natürlich nicht immer den Betätigungswinkel für Vollbremsung α_{VB}. Die Bremsensteuerung wird in jedem Bremsfall ein benötigtes Soll-Bremsmoment T_{B,soll}, auch radindividuell, vorgeben, das dann von der Reibungsbremse 1 eingestellt wird, z.B. durch entsprechendes Ansteuern des Betätigungsmittels 20.

Mit den Kurven 41 und 51 in Fig. 4 und 5 ist das Verhalten derselben Bremse bei abgenutzten Bremsbelägen dargestellt. Vollbremsung, festgelegt durch ein bestimmtes, vorgegebenes maximales Sollbremsmoment, wie z.B. 3500Nm, würde hier bereits bei einem Betätigungswinkel α_{VB} von ungefähr 15° auftreten, wofür ein Betätigungsmoment T_{A} von ungefähr 26Nm aufgewendet werden müsste. Es könnte natürlich in diesem Fall bei Weiterdrehen des Betätigungsmittels 20 ein noch höheres Bremsmoment T_{B} erzielt werden, was von der Bremsensteuerung aber nicht angefordert werden wird. Bei diesem Betätigungswinkel α_{VB} sind die Übersetzungsverhältnisse des Exzenters aber ungünstig und es kann noch keine signifikante Selbstverstärkung auftreten. Es würde für eine Vollbremsung grob das doppelte Betätigungsmoment T_{A} benötigt werden, was aus Sicht des elektrischen Antriebs natürlich ungünstig ist und unter Umständen überhaupt nicht erreichbar sein könnte. Der Grund dafür ist darin zu sehen, dass sich durch die abgenutzten Bremsbeläge die Steifigkeit der Reibungsbremse erhöht, wodurch weniger Betätigungsweg durch die Elastizität der Bremse, insbesondere der Bremsbeläge, aufgenommen wird.

Um diesen nachteiligen Effekt zu verringern, ist nun vorgesehen, den Anfangsbetätigungswinkel α_{A} an den aktuellen Verschleißzustand der Bremsbeläge anzupassen. Das ist in Fig.4 und 5 durch die Kurven 42 und 52 dargestellt. Im gezeigten Ausführungsbeispiel wird der Anfangsbetätigungswinkel α_{A} bei verschlissenen Bremsbelägen vor Beginn der Bremsung auf -18° eingestellt, sodass Vollbremsung wieder bei einem Betätigungswinkel α von ca. 60° eintritt und der Bremsvorgang wieder in einem günstigen Betätigungswinkelbereich mit günstigen Übersetzungsverhältnissen stattfindet. Man erkennt dabei auch, dass das Betätigungsmoment T_{A} sogar insgesamt niedriger wird.

Der Einfluss des Verschleißzustandes der Bremsbeläge auf den Anfangsbetätigungswinkel α_{A} kann natürlich auf vielfältigste Weise in einer Bremsensteuerung berücksichtigt werden. Z.B. könnte ein einfacher tabellarischer Zusammenhang zwischen Verschleiß und Anfangsbetätigungswinkel α_{A} hinterlegt sein. Der Zusammenhang könnte dabei über Versuche ermittelt werden oder berechnet oder simuliert werden. Ebenso kommen neuronale Netzwerke oder Fuzzylogik in Frage, um einen bestimmten Verschleißzustand, eventuell unter Berücksichtigung von weiteren Einflussfaktoren, wie z.B. Umgebungsbedingungen, Fahrsituation, etc., in einen Anfangsbetätigungswinkel α_{A} umzusetzen. Dabei können natürlich auch noch andere Einflussfaktoren berücksichtigt werden, wie z.B. die aktuelle Temperatur der Bremse, da die Elastizität bei steigender Temperatur erwartungsgemäß ebenfalls steigen wird.

Der Verschleißzustand der Bremse bzw. der Bremsbeläge kann ebenfalls auf verschiedenste Weise festgestellt werden. Z.B. könnte über den Anstieg des Betätigungsmoments T_{A} bezogen auf den aktuellen Betätigungswinkel α festgestellt werden, welcher Verschleißzustand vorliegt. Ebenfalls könnte der Verschleißzustand aus Beobachtung der Bremsungen ermittelt werden, d.h. es könnte eine Aufzeichnung angelegt werden, wie lange und wie stark im Belagsleben gebremst wurde, was bei Kenntnis des Verschleißverhaltens der Bremsbeläge Rückschlüsse auf den Verschleißzustand erlaubt. Es könnte auch die Position des Verschleißnachstellers 11 gespeichert oder gemessen werden. Genauso kann bekanntermaßen der Luftspalt gemessen oder aus anderen Messgrößen abgleitet werden.

Daneben wird es noch eine Fülle weiterer Möglichkeiten geben, um einen Verschleißzustand der Reibungsbremse 1 bzw. der Bremsbeläge zu ermitteln, und daraus einen für die Reibungsbremse 1 passenden Anfangsbetätigungswinkel α_{A} abzuleiten. Auf die genaue Methode kommt es erfindungsgemäß aber nicht an, sondern darauf, dass der Einfluss des Verschleißes nun in der Ansteuerung der Reibungsbremse 1 berücksichtigt wird, um einen günstigen Betrieb der Reibungsbremse 1 sicherzustellen.

Auch die Einstellung des erforderlichen Anfangsbetätigungswinkel α_{A} kann auf verschiedenste Weise erfolgen. Es ist z.B. möglich den Anfangsbetätigungswinkel α_{A} bei neuen Bremsbelägen auf das Ende des vorgesehenen Betätigungswinkelbereichs, hier z.B. α_{A}=-60°, einzustellen. Bei jeder Bremsung, und somit bei fortschreitendem Verschleiß der Bremsbeläge, wird das Betätigungsteil des Betätigungsmittels 20 nicht mehr gänzlich rückgestellt, sondern nur mehr auf den vom aktuellen Verschleiß abhängigen neuen Anfangsbetätigungswinkel α_{A}. Der Verschleißnachsteller 11 sorgt dabei für den korrekten Luftspalt. Damit hat man bei der nächsten Bremsung automatisch den richtigen Anfangsbetätigungswinkel α_{A} eingestellt und der Anfangsbetätigungswinkel α_{A} wird so über den Verschleiß nachgeführt. Dabei kann natürlich auch ein erwünschter Luftspalt, der als bekannt vorausgesetzt werden kann, berücksichtigt werden, wenn der Luftspalt durch die Andrückeinrichtung 10 überwunden wird.

Wenn die Reibungsbremse 1 mit Luftspalt (statt leicht anliegenden Bremsbelägen 3,6) betrieben wird, kann der Luftspalt vor Beginn der Bremsung entweder mit dem Verschleißnachsteller 11 überwunden werden, z.B. in dem der Verschleißnachsteller 11 den Bremsbelag 3, 6 an die Bremsscheibe 4 führt, oder die Andrückeinrichtung 10 macht so viel Hub, dass vor der Bremsung zuerst der Luftspalt überwunden wird.

Alternativ könnte auch vorgesehen sein, dass durch den Verschleißnachsteller 11 der Luftspalt zwischen Bremsbelag und Reibfläche in Abhängigkeit vom aktuellen Verschleiß auf einen Wert eingestellt wird, sodass sich der erforderliche Anfangsbetätigungswinkel α_{A} bei Betätigung der Bremse ergibt. Die Bremse kann dazu immer im vorgesehenen Betätigungswinkelbereich, z.B. α_{A}=-60° bis zum verschleißbedingtem Endwinkel, betrieben werden. Dazu kann nach jeder Bremsung der notwendige Luftspalt eingestellt werden, sodass der Anfangsbetätigungswinkel α_{A} für die nächste Bremsung bereits eingestellt ist. Oder der Luftspalt, und damit der Anfangsbetätigungswinkel α_{A}, wird vor jeder Bremsung entsprechend eingestellt.

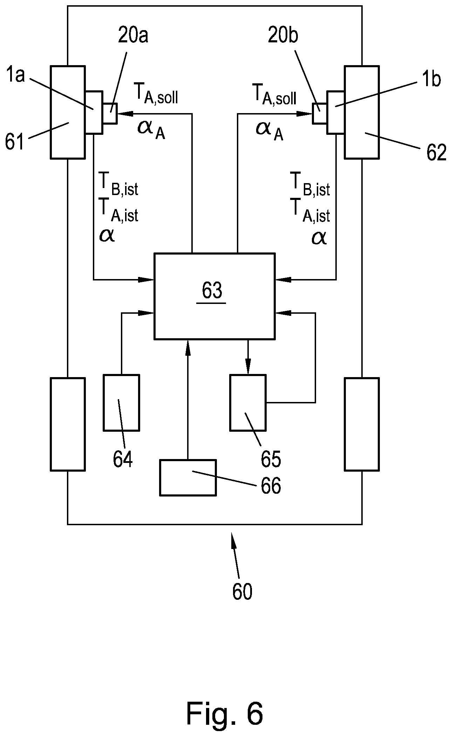

Eine elektrisch betätigte, nicht-lineare Reibungsbremse 1 wird nicht direkt betätigt, sondern indirekt über eine Bremsensteuerung 63 (siehe Fig.6). Eine Bremspedalstellung kann dabei von der Bremsensteuerung ausgewertet und in einen Steuerbefehl für die Reibungsbremse 1, bzw. für die Andrückeinrichtung 10, und gegebenenfalls für den Verschleißnachsteller 11, umgesetzt werden. Gleichzeitig sorgt die Bremsensteuerung für ein richtiges und angenehmes Pedalgefühl. Wunschgemäß soll das Pedalgefühl mit zunehmender Bremsung härter werden. Auch der Pedalweg kann über die Bremsensteuerung eingestellt werden, da bei stärkerem Verschleiß der Bremsbeläge der Pedalweg länger wird. Bei Belagserneuerung würde sich das Pedalgefühl sogar schlagartig ändern, indem das harte Pedalgefühl bei verschlissenen Bremsen in ein weicheres Pedalgefühl umschlagen würde, was den Fahrer möglicherweise bei starken Bremsungen irritieren oder ihm das Gefühl einer defekten Bremse geben könnte. Ziel ist es daher ist, das Pedalgefühl möglichst konstant zu halten, sodass ein Fahrer den Verschleißzustand der Bremsbeläge am Bremspedal gar nicht oder zumindest nicht übermäßig wahrnimmt.

Der Einfluss des Verschleißes auf das Pedalgefühl könnte dabei wiederum durch Tabellen, neuronale Netze, Fuzzylogik, etc. in Abhängigkeit vom aktuellen Verschleißzustand ausgeglichen werden.

Auf gleiche Weise könnte die Änderung des Betätigungsverhaltens kompensiert werden, wenn die Bremsbeläge vor der Bremsung vollständig abgehoben sind, um den Luftspalt bei Beginn der Bremsung unbemerkt für den Fahrer zu überwinden.

Gleichermaßen kann dadurch auch der aktuelle Betriebszustand der Bremse durch das Pedalgefühl abgebildet werden. Die Reibungsbremse kann bei Erhitzung elastischer werden, z.B. durch weicher werdende Bauteile, wie z.B. Bremsbeläge oder Bremssattel. Dies kann als Elastizitätsänderung kompensiert werden, um den Fahrer einen gleichbleibenden Eindruck zu vermitteln. Es kann aber auch die gegenteilige Reaktion sinnvoll sein, um dem Fahrer bei gefährlicher Überhitzung ein besonders weiches Pedalgefühl zu geben, als Vorwarnung eines drohenden Bremswirkungsverlustes durch überhitzte Bremsen. Z.B. könnte bei geringer Überhitzung das sich ändernde Verhalten der Reibungsbremse vom Fahrer ferngehalten (kompensiert) werden und bei gefährlich werdender Überhitzung überbetont werden, um die Warnung an den Fahrer auszulösen.

Bei vollkommen abgefahrenen Bremsbelägen tritt zwischen Reibfläche und Belagsträger des Bremsbelages eine Restbremswirkung, z.B. zwischen Stahl-Stahl, auf. Dieser Zustand kann dem Fahren wiederum als Pedalgefühl vermittelt werden, z.B. durch besonders lange Pedalwege, um eine verminderte Bremswirkung intensiv zu vermitteln.

Diese Vermittlung über das Pedalgefühl kann aber natürlich für beliebige Zustände verwendet werden, z.B. ein überschwerer Anhänger, der über das Pedalgefühl künstlich vermittelt wird, oder andere Zustände aus Straße oder Fahrzeug.

Das Pedalgefühl kann bekannter Weise passiv oder aktiv erzeugt werden. Passiv z.B. mit den bekannten Kombinationen aus Feder und Elastomer ("Gummi") mit denen die Eigenschaft nachgebildet wird, dass das Pedal zu stärkeren Bremsungen überproportional immer härter werden soll (überproportional steigender Kraftaufwand). Wobei dieser Effekt natürlich auch anders erzeugt werden kann, z.B. mit Hebelwirkung, mehreren Federn, progressiven Federn, etc. Aktiv kann die Pedalkraft z.B. mit gesteuerten Aktuatoren, wie z.B. Elektromotor(en), erzeugt oder verändert werden. Damit könnte auch das bekannte "ABS-Rütteln" am Pedal künstlich hervorgerufen werden oder sonstige Rückwirkungen von der Bremskraft nachgebildet werden. Das aktive Verfahren bietet natürlich durch Einspeisung von Kräften mehr Möglichkeiten zu Beeinflussung des Pedalgefühls, ist aber kostenintensiver. Aber auch beim passiven Pedal kann das Pedalgefühl verändert werden. Durch die gewählte Federwirkung (z.B. Feder-Elastomerkombination) entsteht eine Kraft-Weg Kennlinie des Pedals. Wenn man nun ein härteres Pedalgefühl vermitteln will, kann man z.B. die elektronische Auswertung des Pedals so verändern (z.B. von der Bremsensteuerung), sodass eine bestimmte Bremswirkung erst bei weiter gedrücktem Pedal (mehr Pedalkraft) eintritt. Umgekehrt kann man eine weicher (leichter) bedienbare Bremse bei vorgegebener Federwirkung dadurch erreichen, dass die elektronische Auswertung des Pedals bereits bei weniger gedrückten Pedal (weniger Pedalkraft) die gewünschte Bremswirkung hervorruft. Diese Verstellung der Auswertung kann natürlich auch bei aktivem Pedal zusätzlich angewendet werden. Die Pedalkraft muss auch nicht unbedingt überproportional bei starken Bremsungen zunehmen, wichtig ist nur die gute Dosierbarkeit und gewohnte Bedienung durch den Fahrer.

Die elektrisch betätigte Reibungsbremse kann statt vom Fahrer auch aus anderen Quellen betätigt werden, z.B. aus Fahrassistenzsystemen, wie einer Notbremsung bei vorausschauender Erkennung eines Unfalls, einer Abstandshaltung, einem Tempomat, einem "Convoy driving" (elektronisch "gekuppeltem" Autozug, der nicht mechanisch verbunden ist, sondern durch eine elektronische Kontrolle den Abstand hält), etc.. Auch die Mischung von regenerativem Bremsen über den Generator eines Elektro- oder Hybridfahrzeugs und Reibungsbremsung kann so eine Eingangsgröße in die Bremsensteuerung bewirken.

Dazu kann es sinnvoll sein, der Bremsensteuerung über geeignete Schnittstellen Daten über den Fahrzeug-, Fahr- und/oder Bremsenzustand zu übergeben. Damit kann die Bremsensteuerung auf ein Soll-Bremsmoment, z.B. vom Bremspedal, von einem Fahrassistenzsystem, etc., mit einem möglichst genauen Ist-Bremsmoment antworten, wobei gegebenenfalls auch die inneren Zustände der Bremse, wie Verschleißzustand Bremsbelag, Bremsentemperatur, etc., berücksichtigt werden, um den Istwert möglichst gut an den Sollwert heranzubringen.

In Fig.6 ist beispielhaft ein Fahrzeug 60 mit zwei Reibungsbremsen 1a, 1b an den Vorderrädern 61, 62 dargestellt. Die Reibungsbremsen 1a, 1b werden von einer Bremsensteuerung 63 situationsbedingt angesteuert. Dabei kann die Bremsensteuerung 63 ein Soll-Bremsmoment T_{B,soll} oder Soll-Betätigungsmoment T_{A,soll} vorgeben, das von der Reibungsbremse 1a, 1b eingestellt werden soll. Dazu kann das Betätigungsmittel 20a, 20b der Reibungsbremse 1a, 1b mit geeigneten Steuersignalen angesteuert werden, um ein passendes Betätigungsmoment T_{A} zu erzeugen. Selbstverständlich kann das auch in einem geschlossenen Regelkreis erfolgen, wofür entweder das Ist-Bremsmoment T_{B,ist} oder das Ist-Betätigungsmoment T_{A,ist} gemessen werden kann. Da es an sich hinlänglich bekannt ist, wie ein Soll-Bremsmoment T_{B,soll} einer Reibungsbremse ermittelt werden kann, wird hier nicht näher darauf eingegangen. Gleichzeitig erfasst die Bremsensteuerung 63 den Verschleißzustand der Bremsbeläge der Reibungsbremse 1a, 1b, z.B. über eine Messung des Ist-Betätigungsmoments T_{A,ist} und des aktuellen Betätigungswinkels a. Anhand des Verschleißzustandes ermittelt die Bremsensteuerung 63 auch einen auf den Verschleißzustand abgestimmten Anfangsbetätigungswinkel α_{A}, der ebenfalls über das Betätigungsmittel 20a, 20b vor Beginn der Bremsung eingestellt werden kann. Dazu könnte die Bremsensteuerung 63 natürlich auch noch die Signale weiterer Sensoren 64, wie z.B. Temperatursensoren, Beschleunigungssensoren, Reifenschlupfsensoren, etc., erhalten und verarbeiten.

Eine Bremsung kann dabei von einem Bremspedal 65 oder von einem Fahr- oder Bremsassistenzsystem 66 des Fahrzeugs, wie z.B. ABS, ESG, Tempomat, etc., ausgelöst werden.

Ebenso kann die Bremsensteuerung 63 ein passendes Pedalgefühl einstellen, um dem Fahrer das richtige Bremsgefühl am Bremspedal 65 zu vermitteln.

Die Bremsensteuerung 63 kann natürlich auch die Funktion eines möglicherweise vorhandenen Verschleißnachsteller 11 steuern, z.B. in dem vor einer Bremsung zuerst ein allfällig vorhandenes Lüftspiel zwischen Bremsbelag und Reibfläche überwunden wird.

## Patentansprüche

1. Verfahren zum Betreiben einer elektrisch betätigten Reibungsbremse (1) mit nicht-linearem Kraft-Wegverhalten, wobei zum Bremsen ein Betätigungsteil einer an einem Verschleißnachsteller (11) angeordneten Andrückeinrichtung (10) durch ein Betätigungsmittel (20) in einem Betätigungsbereich zwischen einem Anfangsbetätigungswinkel (α_{A}) und einem Endbetätigungswinkel (α_{E}) verdreht wird, und das Betätigungsmittel (20) für eine Bremsung mit einem Betätigungsmoment (T_{A}) verdreht wird, um einen Bremsbelag (6) zur Erzeugung eines Bremsmoments (T_{B}) gegen eine Reibfläche zu drücken, **dadurch gekennzeichnet, dass** der Anfangsbetätigungswinkel (α_{A}) des Betätigungsteils in Abhängigkeit von einem aktuellen Verschleißzustand des Bremsbelages (6) eingestellt wird, um das sich ändernde Kraft-Wegverhalten der Reibungsbremse (1) bei Verschleiß des Bremsbelages (6) zu kompensieren, und dabei der Anfangsbetätigungswinkel (α_{A}) eingestellt wird, damit das Betätigungsmoment (T_{A}) für die Bremsung mit abgenutzten Bremsbelag (6) gegenüber dem Betätigungsmoment (T_{A}) für die Bremsung mit unverschlissenen Bremsbelag (6) niedriger wird.

2. Verfahren nach Anspruch 1, **dadurch gekennzeichnet, dass** ein Bremspedalgefühl in Abhängigkeit von einem aktuellen Verschleißzustand des Bremsbelages (6) eingestellt wird.

3. Verfahren nach Anspruch 1 oder 2, **dadurch gekennzeichnet, dass** vor der Bremsung ein Luftspalt zwischen Bremsbelag (6) und Reibfläche durch einen Verschleißnachsteller (11) überwunden wird.

4. Bremssystem mit einer elektrisch betätigten Reibungsbremse (1) mit nicht-linearem Kraft-Wegverhalten und einer Bremsensteuerung (63) zum Ansteuern der Reibungsbremse (1), wobei die Reibungsbremse (1) ein Betätigungsmittel (20) aufweist, das einen Betätigungsteil einer Andrückeinrichtung (10) für eine Bremsung mit einem Betätigungsmoment (T_{A}) in einem Betätigungsbereich zwischen einem Anfangsbetätigungswinkel (α_{A}) und einem Endbetätigungswinkel (α_{E}) verdreht, um einen Bremsbelag (6) zur Erzeugung eines Bremsmoments (T_{B}) gegen eine Reibfläche zu drücken, wobei die Andrückeinrichtung (10) an einem Verschleißnachsteller (11) angeordnet ist, **dadurch gekennzeichnet, dass** die Bremsensteuerung (63) den Anfangsbetätigungswinkel (α_{A}) des Betätigungsteils zur Kompensation des sich ändernden Kraft-Wegverhaltens der Reibungsbremse (1) bei Verschleiß des Bremsbelages (6) in Abhängigkeit von einem aktuellen Verschleißzustand des Bremsbelages (6) einstellt, und dabei die Bremsensteuerung (63) den Anfangsbetätigungswinkel (α_{A}) einstellt, damit das Betätigungsmoment (T_{A}) für die Bremsung mit abgenutzten Bremsbelag (6) gegenüber dem Betätigungsmoment (T_{A}) für die Bremsung mit unverschlissenen Bremsbelag (6) niedriger wird.

5. Bremssystem nach Anspruch 4, **dadurch gekennzeichnet, dass** ein Bremspedal (65) vorgesehen ist und die Bremsensteuerung (63) ein Bremspedalgefühl in Abhängigkeit von einem aktuellen Verschleißzustand des Bremsbelages (6) einstellt.

6. Bremssystem nach Anspruch 4 oder 5, **dadurch gekennzeichnet, dass** der Verschleißnachsteller (11) vorgesehen ist, vor der Bremsung einen Luftspalt zwischen Bremsbelag (6) und Reibfläche zu überwinden.

## Claims

1. A method for operating an electrically actuated friction brake (1) with non-linear force-travel characteristic, wherein, in order to brake, an actuating part of a pressing device (10) arranged on a wear adjuster (11) is rotated by means of an actuating device (20) in an actuating range between an initial actuating angle (α_{A}) and a final actuating angle (α_{E}), and the actuating device (20) is rotated for a braking operation with an actuating torque (T_{A}), in order to press a brake lining (6) against a friction surface to produce a braking torque (T_{B}), **characterized in that** the initial actuating angle (α_{A}) of the actuating part is adjusted as a function of a current state of wear of the brake lining (6) in order to compensate for the changing force-travel characteristic of the friction brake (1) as the brake lining (6) wears, and in doing so the initial actuating angle (α_{A}) is adjusted in order to decrease the actuating torque (T_{A}) for braking operation with worn brake lining (6) with respect to the actuating torque (T_{A}) for braking operation with unworn brake lining (6).

2. The method as claimed in claim 1, **characterized in that** a brake pedal feel is adjusted as a function of the current state of wear of the brake lining (6).

3. The method as claimed in claim 1 or 2, **characterized in that** an air gap between brake lining (6) and friction surface is overcome by a wear adjuster (11) before the braking operation.

4. A braking system with an electrically actuated friction brake (1) with non-linear force-travel characteristic and a brake controller (63) for activating the friction brake (1), wherein the friction brake (1) has an actuating device (20) which rotates an actuating part of a pressing device (10) for a braking operation with an actuating torque (T_{A}) in an actuating range between an initial actuating angle (α_{A}) and a final actuating angle (α_{E}) in order to press a brake lining (6) against a friction surface to produce a braking torque (T_{B}), wherein the pressing device (10) is arranged on a wear adjuster (11), **characterized in that** the brake controller (63) adjusts the initial actuating angle (α_{A}) of the actuating part as a function of a current state of wear of the brake lining (6) in order to compensate for the changing force-travel characteristic of the friction brake (1) as the brake lining wears, and in doing so the initial actuating angle (α_{A}) is adjusted by the brake controller (63) in order to decrease the actuating torque (T_{A}) for braking operation with worn brake lining (6) with respect to the actuating torque (T_{A}) for braking operation with unworn brake lining (6).

5. The braking system as claimed in claim 4, **characterized in that** a brake pedal (65) is provided and the brake controller (63) adjusts a brake pedal feel as a function of the current state of wear of the brake lining (6).

6. The braking system as claimed in claim 4 or 5, **characterized in that** the wear adjuster (11) is provided to overcome an air gap between brake lining (6) and friction surface before the braking operation.

## Revendications

1. Procédure d'exploitation d'un frein de friction électrique (1) avec un parcours de force non linéaire qui, pour freiner, tourne un élément d'actionnement d'un dispositif de pression (10) agencé au niveau d'un engrenage hélicoïdal (11) via un actionneur (20) dans une zone d'actionnement entre un angle de début d'activation (α_{A}) et un angle de fin d'activation (α_{E}), et l'actionneur (20) est tourné pour un freinage avec un moment d'actionnement (T_{A}) pour appuyer une plaquette de frein (6) contre une surface de frottement pour créer un moment de freinage (T_{B}), **caractérisé par le fait que l'**angle de début d'activation (α_{A}) de l'élément d'actionnement est réglé en fonction de l'état d'usure actuel de la plaquette de frein (6) pour compenser le parcours de force changeant du frein de friction (1) en cas d'usure de la plaquette de frein (6) et ainsi de régler l'angle de début d'activation (α_{A}) pour que le moment d'actionnement (T_{A}) pour le freinage avec une plaquette de frein (6) usée soit plus faible par rapport au moment d'actionnement (T_{A}) pour le freinage avec une plaquette de frein (6) non usée.

2. Procédure selon exigence 1, **caractérisée par le fait qu'**une sensation de pédale de frein sera réglée en fonction de l'état d'usure actuel de la plaquette de frein (6).

3. Procédure selon exigence 1 ou 2, **caractérisée par le fait qu'**avant le freinage, un entrefer entre la plaquette de frein (6) et la surface de frottement sera franchi via un engrenage hélicoïdal (11).

4. Système de freinage avec un frein de friction électrique (1) avec un parcours de force non linéaire et une commande de frein (63) pour contrôler le frein de friction (1), qui est équipé d'un actionneur (20) qui tourne un élément d'actionnement d'un dispositif de pression (10) pour un freinage avec un moment d'actionnement (T_{A}) dans une zone d'actionnement entre un angle de début d'activation (α_{A}) et un angle de fin d'activation (α_{E}) pour appuyer une plaquette de frein (6) contre une surface de frottement pour créer un moment de freinage (T_{B}) où le dispositif de pression (10) est agencé au niveau d'un engrenage hélicoïdal (11) **caractérisé par le fait que** la commande de frein (63) règle l'angle de début d'activation (α_{A}) de l'élément d'actionnement pour compenser le parcours de force non linéaire changeant du frein de friction (1) en cas d'usure de la plaquette (6) en lien avec l'état d'usure actuel de la plaquette de frein (6) et ainsi la commande de frein règle l'angle de début d'activation (α_{A}) pour que le moment d'actionnement (T_{A}) pour le freinage avec une plaquette de frein (6) usée soit plus faible par rapport au moment d'actionnement (T_{A}) pour le freinage avec une plaquette de frein (6) non usée.

5. Système de freinage selon exigence 4, **caractérisé par le fait qu'**une pédale de frein (65) est prévue et que la commande de frein (63) règle la sensation de pédale de frein en fonction de l'état d'usure actuel de la plaquette de frein (6).

6. Système de freinage selon l'exigence 4 ou 5, **caractérisé par le fait que** l'engrenage hélicoïdal (11) est prévu pour franchir un entrefer entre la plaquette de frein (6) et la surface de frottement avant le freinage.
